(19)

**Europäisches Patentamt**
**European Patent Office**
**Office européen des brevets**

(11) **EP 2 469 702 A1**

(12) **EUROPÄISCHE PATENTANMELDUNG**

(43) Veröffentlichungstag:
  **27.06.2012  Patentblatt 2012/26**

(51) Int Cl.:
  ***H02P 21/08*** *(2006.01)*

(21) Anmeldenummer: **10196838.6**

(22) Anmeldetag: **23.12.2010**

(84) Benannte Vertragsstaaten:
  **AL AT BE BG CH CY CZ DE DK EE ES FI FR GB GR HR HU IE IS IT LI LT LU LV MC MK MT NL NO PL PT RO RS SE SI SK SM TR**
  Benannte Erstreckungsstaaten:
  **BA ME**

(71) Anmelder: **Baumüller Nürnberg GmbH**
  **90482 Nürnberg (DE)**

(72) Erfinder:
  • **Barinberg, Viktor**
    **90491 Nürnberg (DE)**

  • **Liu, Biao**
    **90403 Nürnberg (DE)**
  • **Skowronek, Ernst**
    **90471 Nürnberg (DE)**

(74) Vertreter: **Götz, Georg Alois**
    **Intellectual Property IP-GÖTZ**
    **Patent- und Rechtsanwälte**
    **Am Literaturhaus, Königstrasse 70**
    **90402 Nürnberg (DE)**

(54) **Verfahren und Anordnung zur Nachführung einer Schlupfvorgabe für einen feldorientierten Regelkreis einer Asynchronmaschine**

(57)    Verfahren zur Nachführung einer Schlupfvorgabe für einen einen feldorientierten Regelkreis einer Asynchronmaschine, wobei eine flussbildende Sollwert-Stromkomponente mit einem Testsignal beeinflusst wird, und mit dem in der Asynchronmaschinen erzeugten Drehmoment zusammenhängende Größen, beispielsweise eine Ist-Drehzahl des Läufers und/oder eine drehmomentbildende Istwert- oder Sollwert-Stromkomponente, auf eine Wechselwirkung mit dem oder auf eine Beeinflussung durch das Testsignal hin ausgewertet werden, und abhängig von dabei festgestellten Testsignal-Anteilen die Schlupfvorgabe ermittelt oder verstellt wird, wobei ein Testsignal mit einer vorbestimmten diskreten Injektionskreisfrequenz verwendet wird, auf die hin die mit dem Drehmoment zusammenhängenden Größen zur Feststellung ihrer Testsignal-Anteile gefiltert werden.

Fig. 1

EP 2 469 702 A1

**Beschreibung**

Die Erfindung betrifft ein Verfahren zur Nachführung einer Schlupfvorgabe für einen feldorientierien Regelkreis einer Asynchronmaschine, wobei eine flussbildende Sollwert-Stromkomponente mit einem Testsignal beeinflusst wird, und mit dem in der Asynchronmaschine erzeugten Drehmoment zusammenhängende Größen, beispielsweise die Ist-Drehzahl des Läufers und/oder eine drehmomentbildende Istwert- oder Sollwert-Stromkomponente auf eine Wechselwirkung mit dem oder auf eine Beeinflussung durch das Testsignal hin ausgewertet werden, und abhängig von dort festgestellten Testsignal-Anteilen die Schlupfvorgabe ermittelt oder verstellt wird.

Bei Asynchronmaschinen besteht eine Drehzahldifferenz zwischen dem Drehfeld des Stators und der tatsächlichen Drehzahl (Ist-Drehzahl) des Rotors. Die Ist-Drehzahl des Rotors bzw. Läufers ist im motorischen Betrieb immer kleiner als die Statordrehzahl. Die Stator-Drehfeldgeschwindigkeit $\omega_1$ ist dementsprechend als Summe aus Ist-Drehzahl des Läufers w und Schlupffrequenz $\omega_2$ definiert:

$$\omega_1 = \omega_2 + \omega$$

Die Schlupffrequenz $\omega_2$ ist nicht konstant, sondern von mehreren Größen abhängig. Sie ist über einen Proportionalitätsfaktor $k_{Schlupf}$, im Folgenden Schlupffaktor genannt, mit dem Querstromsollwert $iq_{1soll}$ verknüpft:

$$\omega_2 = i_{q1soll} \cdot k_{Schlupf}$$

Der Schlupffaktor $k_{Schlupf}$ selbst hängt vom Rotorwiderstand $r_2$, der Hauptinduktivität der gesamten Maschine $L_h$ und dem Längsstromwert $I_d$ ab:

$$k_{Schlupf} = \frac{r_2}{L_h \cdot I_d} = \frac{1}{T_R \cdot I_d}$$

Alternativ kann der Schlupffaktor $k_{Schlupf}$ auch in Abhängigkeit der Rotorzeitkonstanten $T_R$ und des Längsstromwerts $I_d$ dargestellt sein.

Die Schlupffrequenz $\omega_2$ ist in einem feldorientierten Antriebsregelkreis mit einem Asynchronmotor kontinuierlich vorzugeben, wobei zur Vorgabe der Rotorwiderstand $r_2$ oder die Rotorzeitkonstante $T_R$ festzustellen ist. Diese Größen hängen unter anderem von der Rotortemperatur ab. Da sich die Rotortemperatur ständig ändert, ist auch eine ständige Anpassung des Schlupffaktors $k_{Schlupf}$ notwendig, um die korrekte Feldorientierung und damit eine befriedigende Regelungsqualität zu erreichen.

In einem bewährten Ansatz wird die Anpassung des Schlupffaktors $k_{Schlupf}$ anhand einer Temperaturkennlinie vorgenommen, wobei zur Verwendung der Temperaturkennlinie selbstverständlich die Rotortemperatur zu ermitteln ist. Dies erfordert einen Temperatursensor auf dem Rotor, der aus konstruktiven Gründen nicht praktikabel ist. Stattdessen wird eine Nachführung über die Statortemperatur durchgeführt, was allerdings Ungenauigkeiten in sich birgt.

Zusätzlich wird bei diesem Vorgehen die Abhängigkeit des Rotorwiderstandes $r_2$ (sogenannter Skin-Effekt oder Stromverdrängung) von der Frequenz nicht berücksichtigt.

Aus S.Wade, M. W. Dunnigan and Barry W. Williams, "A New Method of Rotor Resistance Estimation For Vector-Controlled Induction Machines",. IEEE Transactions On Industrial Electronics, vol. 44, No. 2, April 1997 geht ein Verfahren zur Bestimmung des Rotorwiderstandes $r_2$ hervor, das selbstregulierend ist und dabei ohne Spannungssensoren auskommt. Zur Durchführung des Verfahrens wird ein einzelner Rechteck-Impuls auf die flussbildende Sollwert-Stromkomponente $i_{d1soll}$ (bei Wade: $i^*_{dse}$) gegeben. Anschließend wird mit einem mehrstufigen Algorithmus die drehmomentbildende Sollwert-Stromkomponente $iq_{1soll}$ (bei Wade: $i^*_{qse}$) dahingehend untersucht, ob auch in der drehmomentbildenden Sollwert-Stromkomponente $i_{q1soll}$ eine Beeinflussung durch den Impuls stattgefunden hat. In diesem Fall ist die Schlupffrequenz $\omega_2$ nämlich nicht korrekt vorgegeben, weshalb die Längsstromkomponente und die Querstromkomponente miteinander verkoppelt werden, wodurch eine Beeinflussung der drehmomentbildenden Sollwert-Stromkomponente $i_{q1soll}$ durch den Puls stattfindet, obwohl dieser nur auf die flussbildende Sollwert-Stromkomponente gegeben wurde.

Der bei Wade verwendete Algorithmus weist eine Vielzahl von Schritten auf. Es ist daher Aufgabe der vorliegenden Anmeldung, ein Verfahren der eingangs genannten Art anzugeben, das einfacher und schneller auszuwerten ist.

Zur Lösung dieser Aufgabe wird auf das im Anspruch 1 angegebene Nachführverfahren verwiesen. Demnach wird ein Testsignal mit einer vorbestimmten diskreten Injektionskreisfrequenz verwendet, auf die hin die mit dem Drehmoment zusammenhängenden Größen zur Feststellung ihrer Testsignal-Anteile mit Erzeugung von Filterergebnissen gefiltert werden. Optionale, vorteilhafte Ausgestaltungen ergeben sich aus den abhängigen Ansprüchen.

Ein Rechteckimpuls ist eine Signalform, die sich aus einer theoretischerweise unendlichen Anzahl von Frequenzen zusammensetzt. Dies wird beispielsweise bei einer Fourier-Zerlegung eines Rechteckpulses deutlich. In der Praxis kann selbstverständlich nur eine endliche Anzahl von Frequenzen berücksichtigt werden, weshalb ein realer Rechteckimpuls Überschwinger an den Rändern aufweist. Im Gegensatz dazu wird erfindungsgemäß ein Testsignal mit einer vorbestimmten diskreten Injektionskreisfrequenz verwendet, wodurch sich vereinfacht feststellen lässt, ob sich Testsignal-Anteile in der Ist-Drehzahl des Läufers $\omega$ und/oder einer drehmomentbildenden Istwert- oder Sollwert-Stromkomponente $i_{q1soll}$ finden. Insbesondere erfordert die Auswertung keinen mehrstufigen Algorithmus.

Vorzugsweise kann als Testsignal ein stetiges, periodisches, kontinuierliches oder quasikontinuierliches Signal mit der Injektionskreisfrequenz $\omega_c$ verwendet werden. Je nachdem, ob das Testsignal analog oder digital generiert wird, ist das Signal kontinuierlich oder quasikontinuierlich. Bei einer digitalen und damit quasikontinuierlichen Signalverarbeitung ist die Forderung nach Stetigkeit des Signals dahingehend zu erfüllen, dass bei einer gedachten Verbindung der einzelnen Stützstellen des Signals ein stetiges Signal entsteht. Vorteilhafterweise kann als Testsignal ein sinusförmiges Signal verwendet werden. Ein Sinussignal ist bei analoger Generierung stetig und kontinuierlich, bei digitaler Erzeugung ergibt sich bei gedachter Verbindung der einzelnen Stützstellen ebenfalls ein (quasi-)stetiges Signal.

Mit besonderem Vorteil kann die Periode des Testsignals ($T_C$) kleiner als die Rotorzeitkonstante ($T_R$) der elektrischen Asynchronmaschine sein und andererseits die Injektionskreisfrequenz ($\omega_c$) innerhalb der Bandbreite oder dem Durchlassbereich des Drehzahlregelkreises liegen. Die Injektionskreisfrequenz kann zweckmäßig also so ausgewählt werden, dass sie keine wesentlichen Änderungen des magnetischen Flusses versursacht. Da die Übertragungsfunktion zwischen dem flussbildenden Strom und dem Fluss ein PT1-Glied mit der Zeitkonstanten $T_R$ aufweist, sollte die Injektionskreisfrequenz die folgende Bedingung erfüllen:

$$\omega_c >> \frac{2\pi}{T_R} .$$

Anders ausgedrückt sollte die Periode des Injektionssignals ($T_c = 2\pi/\omega_c$) wesentlich kleiner als die Rotorzeitkonstante $T_R$ sein. Die Rotorzeitkonstante $T_R$ liegt beispielsweise in einem Bereich von mehreren hundert Millisekunden, insbesondere bei 300 Millisekunden. Andererseits darf die Injektionskreisfrequenz ($\omega_c$) nicht zu hoch sein, damit sie nicht außerhalb der Bandbreite oder des Durchlassbereichs des Drehzahlregelkreises liegt bzw. keine erfassbaren Drehzahlschwingungen verursachen kann. Sie muss also innerhalb des Frequenzbandes liegen, das der Regelkreis verarbeiten kann. Ansonsten wirkt die Maschine aufgrund ihres Trägheitsmomentes mechanisch als Tiefpass und filtert die Injektionskreisfrequenz ($\omega_c$) aus. Ein zweckmäßiger Wert der Injektionsfrequenz ($f_c$) ($\omega_c = 2\pi f_c$) liegt zwischen 40 Hz und 100 Hz, insbesondere bei 70 Hz.

Mit besonderem Vorteil können die Filterergebnisse demoduliert und die Schlupfvorgabe in Abhängigkeit des Demodulationsergebnisses ermittelt werden. Die Ist-Drehzahl des Läufers $\omega$ und/oder eine drehmomentbildende Istwert- oder Sollwert-Stromkomponente $i_{q1soll}$ werden also zuerst gefiltert und dann demoduliert. Die Filterung geschieht in einem Frequenzbereich, in dem Testsignal-Anteile in den untersuchten Größen zu erwarten sind. Durch die Demodulation kann das untersuchte Signal in einen Wechsel-Anteil (Testsignal-Anteil) und einen konstanten Gleichanteil aufgespalten werden. Ein derartiger Testsignal-Anteil tritt selbstverständlich nur dann auf, wenn der Schlupf nicht korrekt eingestellt ist. Bei korrekter Schlupfvorgabe enthalten die untersuchten Signale keinerlei Testsignal-Anteil, in diesem Fall ist der Testsignal-Anteil null. Wenn die Schlupfvorgabe allerdings nicht korrekt ist, und dementsprechend auch der Schlupf nicht zu den Arbeitsbedingungen passt, kann die korrekte bzw. verbesserte Schlupfvorgabe aus dem Demodulationsergebnis jeweils ermittelt werden. Durch die Verwendung einer vorbestimmten diskreten Injektionskreisfrequenz ist dementsprechend kein aufwendiger Algorithmus erforderlich.

Vorteilhafterweise kann das Vorzeichen oder die Phase der Schlupfvorgabe an das Vorzeichen der drehmomentbildenden Istwert- oder Sollwert-Stromkomponente $i_{q1soll}$ oder den jeweiligen Quadranten eines Vier-Quadranten-Antriebs angepasst werden. Hierzu wird ein Signumsglied verwendet, auf das die drehmomentbildende Istwert- oder Sollwert-Stromkomponente $i_{q1soll}$ gegeben wird. Das Ausgangsergebnis des Signumglieds wird mit dem Demodulationsergebnis über ein Multiplizierglied verknüpft.

Vorzugsweise kann das Testsignal mit der Injektionskreisfrequenz $\omega_c$ unter einer vorgegebenen Phasenver-

schiebung, beispielsweise 90° ($\pi$/2), zur Demodulation verwendet werden. Diese Phasenverschiebung ist zweckmäßig, weil die Ist-Drehzahl des Läufers auf Testsignal-Anteile ausgewertet wird, die wegen der Massenträgheit bzw. Tiefpass-scharakteristik der elektrischen Maschine nacheilen. Die Untersuchung der Ist-Drehzahl des Läufers $\omega$ ist vorteilhaft, wenn der Stromregler für die drehmomentbildende Sollwert-Stromkomponente $i_{q1soll}$ am Anschlag ist bzw. eine Strombegrenzung erreicht. In diesem Fall liegt kein geschlossener Drehzahlregelkreis vor, es wird nur eine Strom- bzw. Momentenregelung verwendet, eine Drehzahlregelung erfolgt aber nicht.

Mit besonderem Vorteil können die Ist-Drehzahl des Läufers $\omega$ und gleichzeitig die drehmomentbildende Istwert- oder Sollwert-Stromkomponente $i_{q1soll}$ jeweils zur Feststellung ihrer Testsignal-Anteile parallel gefiltert, die jeweiligen Filterergebnisse nachfolgend parallel demoduliert dann miteinander summiert oder einander überlagert, und das Summier- oder Überlagerungsergebnis zur Schlupfvorgabe verwendet werden. Bei dieser Ausgestaltung ist also gleichzeitig eine Drehmomentregelung und eine Drehzahlregelung möglich. Die Drehzahlregelung erfolgt anhand des Testsignal-Anteils in der drehmomentbildenden Istwert- oder Sollwert-Stromkomponente $i_{q1soll}$, während die Moment- bzw. Stromregelung anhand der Ist-Drehzahl des Läufers $\omega$ erfolgt.

Vorzugsweise kann zur Schlupfvorgabe ein als Integrierglied ausgeführter Nachführregler verwendet werden, mit dem die Filterergebnisse, gegebenenfalls nach Demodulation und/oder Gewichtung mit dem Vorzeichen bzw. Betriebsquadranten (motorischer oder generatorischer Betrieb) der drehmomentbildenden Istwert- oder Sollwert-Stromkomponente $i_{q1soll}$, zu einem Schlupffaktor $k_{Schlupf}$ verarbeitet werden. Auch der Nachführregler ist dementsprechend ein einfaches elektronisches Bauteil, wodurch die Nachführung des Schlupfes insgesamt vereinfacht und schneller durchführbar wird. Insbesondere ist das einzige Bauteil des Nachführreglers das Integrierglied, weitere Bauteile sind nicht notwendig.

Vorzugsweise kann der Schlupffaktor $k_{schlupf}$ mit der drehmomentbildenden Istwert- oder Sollwert-Stromkomponente $i_{q1soll}$ multipliziert werden. In einer Ausgestaltung kann der Schlupffaktor $k_{Schlupf}$ mit seinem Nennwert $k_{Schlupf\_n}$ am Ausgang des Nachführreglers vorgesteuert werden. Letzten Endes pendelt der Schlupffaktor $k_{Schlupf}$ um einen Nennwert herum, sowie auch der Schlupf um einen Nennschlupf herum pendelt. Dementsprechend wird also nur der Nennwert des Schlupffaktors $k_{Schlupf\_n}$ durch Addition der Änderung des Schlupffaktors $\Delta k_{schlupf}$ in den Schlupffaktor $k_{schlupf}$ überführt.

Mit besonderem Vorteil kann die Injektionskreisfrequenz $\omega_c$ vorzugsweise kontinuierlich innerhalb eines vor-bestimmten Intervalls ($\omega_{c0}$ - $\Delta\omega$, $\omega_{c0}$ + $\Delta\omega$) variiert werden. Das Intervall ist dabei um die Mitten- oder NennInjektions-kreisfrequenz $\omega_{c0}$ herum gelegt. Das Drehzahl- bzw. das Signal der drehmomentbildenden Istwert- oder Sollwert-Stromkomponente ($i_{q1soll}$) kann parasitäre Schwingungen unterschiedlicher Frequenzen enthalten, die typischerweise Vielfache der mechanischen Drehzahl sind. Diese parasitären Frequenzen können bei bestimmten Drehzahlen nahe an der Injektionskreisfrequenz ($\omega_c$) liegen. Damit es nicht zu einer Fehlberechnung des Schlupffaktors ($k_{Schlpf}$) kommt ist es daher vorteilhaft, wenn die Injektionskreisfrequenz ($\omega_c$) kontinuierlich verändert wird. Kontinuierlich ist dabei in zeitlicher Hinsicht aufzufassen, es ist nicht mit einer linearen Änderung der Injektionskreisfrequenz ($\omega_c$) von der unteren Grenze des Intervalls zur oberen gleichzusetzen. Auch wenn dies selbstverständlich möglich ist, werden bevorzugt die Fre-quenzwerte der Injektionskreisfrequenz ($\omega_c$) durch einen Zufallssignal-Generator ausgegeben. Die Bandbreite des Bandpasses ist so auszulegen, dass alle Frequenzen im vorgegebenen Intervall durchgelassen werden. Die durch den Zufallssignal-Generator ausgegebene Frequenz ist dann jeweils die vorbestimmte diskrete Injektionskreisfrequenz ($\omega_c$).

Daneben betrifft die Erfindung auch eine feldorientierte Regelungsanordnung mit einer Asynchronmaschine und einem Schlupfvorgabemodul zur Berücksichtigung eines Schlupfes zwischen einer Ist-Drehzahl des Läufers ($\omega$) und der Ständer-Drehfeldgeschwindigkeit ($\omega_1$) der Asynchronmaschine, wobei das Schlupfvorgabemodul umfasst:

- eine Testsignalquelle, deren Ausgang mit einem Sollwert-Eingang eines Reglers für die flussbildende Stromkomponente gekoppelt ist,
- ferner eine Nachführeinrichtung, die eingangsseitig mit dem Ausgang einer Auswerteeinrichtung verbunden und zur Ermittlung eines Schlupffaktors ($k_{Schlup}$) zur Schlupf-Berücksichtigung ausgebildet ist.

Der erfindungsgemäße Regelungsanordnung zeichnet sich dadurch aus, dass die Auswerteeinrichtung eingangsseitig mit einem Geber für die Ist-Drehzahl des Läufers ($\omega$) und/oder mit einer drehmomentbildenden Istwert-oder Sollwert-Stromkomponente ($i_{q1soll}$) gekoppelt ist und zur Ausgabe eines Signals oder Wertes proportional zum festgestellten Testsignal-Anteilen ausgebildet ist.

Die erfindungsgemäße Regelungsanordnung hat den Vorteil eines einfachen Aufbaus, der ohne die Verwendung von aufwendigen Algorithmen auskommt. Dies wird dadurch erreicht, dass die Auswerteeinrichtung eingangsseitig die Ist-Drehzahl des Läufers ($\omega$) und/oder eine drehmomentbildende Istwert- oder Sollwert-Stromkomponente $i_{q1soll}$ erhält, die einfach auf Testsignal-Anteile in diesen Signalen untersuchbar sind.

Vorteilhafterweise kann die Testsignalquelle zur Ausgabe eines stetigen, kontinuierlichen oder quasikontinuierlichen Signals mit einer vorbestimmten, diskreten Injektionskreisfrequenz ($\omega_c$) ausgebildet sein, und die Auswerteeinrichtung mindestens einen Bandpass umfassen, dessen Mittenfrequenz auf die Injektionskreisfrequenz ($\omega_c$) abge-

stimmt ist, wobei der Bandpass eingangsseitig mit einer drehmomentbildenden Istwert- oder Sollwert-Stromkomponente ($i_{q1soll}$) oder mit einem Geber für eine Ist-Drehzahl des Läufers ($\omega$) der Asynchronmaschine verbunden ist. Die Ausführungen hinsichtlich der Stetigkeit des kontinuierlichen oder quasikontinuierlichen Signals gelten selbstverständlich wie oben bezüglich des erfindungsgemäßen Verfahrens beschrieben. Die Anzahl der Bandpässe hängt direkt von der Anzahl der untersuchten Signale ab. Wird gleichzeitig die Ist-Drehzahl des Läufers ($\omega$) der Asynchronmaschine und die drehmomentbildende Sollwert-Stromkomponente ($i_{q1soll}$) untersucht, so werden zwei Bandpässe benötigt. Wird dagegen jeweils nur eine der genannten Größen verarbeitet, so wird auch nur ein Bandpass eingesetzt.

Vorteilhafterweise kann die Auswerteeinrichtung zur Erzeugung eines Ausgangswerts proportional zum die Injektionskreisfrequenz ($\omega_c$) aufweisenden Bandpass-Ausgangssignal mindestens einen Demodulator umfassen, dessen Ausgang der Nachführeinrichtung zugeführt ist. Dementsprechend wird das untersuchte Signal erst gefiltert und dann demoduliert, wodurch zur Erzeugung des Schlupffaktors ($k_{Schlupf}$) kein aufwendiger Algorithmus benötigt wird und ein elektronisch einfacher Aufbau einsetzbar ist.

Vorzugsweise weist die Reglungsanordnung wenigstens zwei parallele, gleichartige Bandpässe in der Auswerteeinrichtung auf, von denen einer mit der drehmomentbildenden Istwert- oder Sollwert-Stromkomponente ($i_{q1soll}$) und der andere mit einem Geber für eine Ist-Drehzahl des Läufers ($\omega$) verbunden ist. Durch die parallele Anordnung können die Signale gleichzeitig verarbeitet werden, wodurch sich die Nachführung zeitnah durchführen lässt. Weiterhin können, sofern nötig, die Bandpässe auf unterschiedliche Mittenfrequenzen ausgerichtet werden.

Vorteilhafterweise kann die Nachführeinrichtung einen eingangsseitig mit dem Ausgang der Auswerteeinrichtung gekoppelten Nachführregler, beispielsweise als Integrator ausgebildet, zur Erzeugung des Schlupffaktors ($k_{Schlupf}$) umfassen. Weiterhin kann die Nachführeinrichtung zur Verknüpfung des Schlupffaktors ($k_{Schlupf}$) mit der drehmomentbildenden Istwert-oder Sollwert-Stromkomponente ($i_{q1soll}$) zur Bildung einer Schlupffrequenz ($\omega_2$) für die Berücksichtigung des Schlupfes ausgebildet sein. Auch der Nachführregler ist dementsprechend einfach aufgebaut, wodurch die gesamte Regelungsanordnung einfach aufgebaut ist und trotzdem eine präzise und zuverlässige Nachführung des Schlupfes erlaubt.

Weitere Vorteile, Merkmale und Einzelheiten der Erfindung ergeben sich anhand der folgenden Ausführungsbeispiele sowie aus den Zeichnungen. Dabei zeigen:

Figur 1: Ein Blockschaltbild einer Regelungsanordnung in einer ersten Ausführungsform,

Figur 2: ein Blockschaltbild einer Regelungsanordnung in einer zweiten Ausführungsform,

Figur 3: ein Blockschaltbild einer Regelungsanordnung in einer dritten Ausführungsform,

Figur 4: ein Regelungsverfahren in einer ersten Ausführungsform,

Figur 5: ein Regelungsverfahren in einer zweiten Ausführungsform,

Figur 6: ein Regelungsverfahren in einer dritten Ausführungsform, und

Figur 7: ein Strom-/Zeitdiagramm für die flussbildende Stromkomponente $i_{d1soll}$

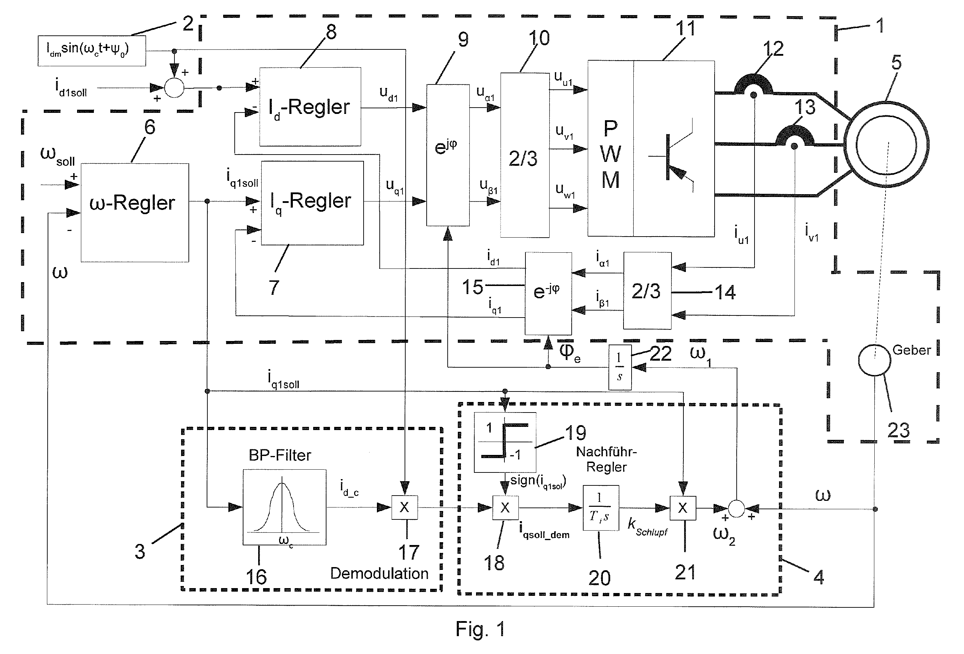

Figur 1 zeigt eine Regelungsanordnung zur Drehzahlregelung. Diese besteht aus der Steuerungsgrundanordnung 1, der Testsignalquelle 2, der Auswerteeinrichtung 3 und der Nachführeinrichtung 4. Die Steuerungsgrundanordnung 1 ist jeweils mit dem Stator 5, der Testsignalquelle 2, der Auswerteeinrichtung 3 und der Nachführeinrichtung 4 verbunden. Wie allgemein üblich wird vorausgesetzt, dass sich die Regelung bzw. der Drehzahlregler im linearen Bereich befindet.

Die einzelnen Komponenten der Steuerungsgrundanordnung 1 werden im Folgenden kurz dargestellt. Der Geschwindigkeitsregler 6 gibt die Sollwert-Stromkomponente $i_{q1soll}$ auf den Querstromregler 7. Die flussbildende Soll-Stromkomponente $i_{d1soll}$ wird dagegen nach Aufprägung des Injektionssignals mit Injektionskreisfrequenz $\omega_c$ auf den Längsstromregler 8 gegeben. Vom Querstromregler 7 und Längsstromregler 8 werden die Längs- bzw. Querspannungsvorgaben $u_{d1}$ bzw. $u_{q1}$ auf die Koordinaten-Transformationseinheit 9 gegeben. Die Koordinaten-Transformationseinheit 9 wandelt die rotorbezogenen Spannungsvorgaben $u_{d1}$ und $uq_1$ in statorbezogene Spannungsvorgaben $u_{\alpha1}$ und $u_{\beta1}$ um. Diese werden von der 2-zu-3-Phasen-Transformationseinheit 10 in drei dem Drehstromsystem entsprechende Phasen $u_{u1}$ $u_{v1}$ und $u_{w1}$ umgesetzt und auf den als Pulsweitenmodulator ausgebildeten Umrichter 11 gegeben.

Zwischen dem Umrichter 11 und dem Stator 5 werden mit den Stromsensoren 12 und 13 die Phasenströme $i_{u1}$ und $i_{v1}$ abgegriffen und auf die 3-zu-2-Phasen-Transformationseinheit 14 gegeben. Diese wandelt die Phasenströme in die statorbezogenen Stromkomponenten $i_{\alpha1}$ und $i_{\beta1}$ um. Durch eine Transformation mit der zweiten Koordinaten-Transformationseinheit 15 werden die statorbezogenen Ströme in die flussbildende Ist-Stromkomponente $i_{d1}$ und die drehmomentbildende Ist-Stromkomponente $i_{q1}$, beide rotorbezogen, umgewandelt. Die flussbildende Ist-Stromkomponente $i_{d1}$ wird anschließend vom Längsstromregler 8 empfangen und die drehmomentbildende Ist-Stromkomponente $i_{q1}$ vom Querstromregler 7.

Die Testsignalquelle 2 gibt das Testsignal auf die flussbildende Sollwert-Stromkomponente $i_{d1soll}$ Bei dem beispielhaften Testsignal handelt es sich um ein stetiges, periodisches, kontinuierliches oder quasikontinuierliches Sinussignal. Das Testsignal ist kontinuierlich, wenn die Testsignalquelle analog ausgestaltet ist und quasikontinuierlich, wenn die Testsignalquelle 2 auf digitaler, z.B. stufenweiser Testsignal-Erzeugung beruht.

Die drehmomentbildende Sollwert-Stromkomponente $i_{q1soll}$ wird nicht nur auf den Querstromregler 7 gegeben, sondern auch der Auswerteeinrichtung 3 zugeführt. Die Auswerteeinrichtung 3 besteht aus einem Bandpass 16 bzw. Bandpassfilter 16, der mit der Mittenfrequenz auf die Injektionskreisfrequenz $\omega_c$ der Testsignalquelle 2 ausgerichtet ist. Bei kontinuierlich wechselnder Injektionskreisfrequenz $\omega_c$ liegt die Mittenfrequenz bei der Nenninjektionsfrequenz $\omega_{c0}$. Wenn die drehmomentbildende Sollwert-Stromkomponente $i_{q1soll}$ Testsignal-Anteile enthält, so können diese sich lediglich in einem mehr oder weniger engen Frequenzbereich befinden. Bei der Bemessung des Bandpasses 16 ist zu berücksichtigen, ob die Injektionskreisfrequenz $\omega_c$ kontinuierlich geändert wird, um die Auswertung gegenüber parasitären Schwingungen in der drehmomentbildenden Sollwert-Stromkomponente $i_{q1soll}$ von Testsignal-Anteilen unterscheiden zu können. Sollten in der drehmomentbildenden Sollwert-Stromkomponente $i_{q1soll}$ keinerlei parasitäre Schwingungen auftreten, so ist eine kontinuierliche Veränderung der Injektionskreisfrequenz $\omega_c$ nicht notwendig.

Zur Demodulation umfasst die Auswerteeinrichtung 3 weiterhin ein Multiplizierglied 17. Am Multiplizierglied 17 werden das Filterergebnis des Bandpasses 16 und das Injektionssignal $I_{dm}\sin(\omega_c t+\Psi_0)$ miteinander multipliziert. Nach der Multiplikation liegt das Demodulationsergebnis ggf. mit einem Gleich-und Wechselanteil vor und wird auf das Multiplizierglied 18 gegeben. Am Multiplizierglied 18 wird das Demodulationsergebnis abhängig von der Ausgabe des Signumglieds mit dem Faktor -1 oder 1 multipliziert. Falls der Wert der drehmomentbildenden Sollwert-Stromkomponente $i_{q1soll}$ kleiner als null ist gibt das Signusglied 19 den Wert -1 aus, andernfalls 1. Das mit der Ausgabe aus dem Signusglied 19 multiplizierte Demodulationsergebnis wird dann dem Nachführregler 20 zugeführt. Dieser ist als Integrierglied ausgeführt, welcher etwaige Wechselanteile aus dem Demodulationsergebnis wegfiltert. Aus dem Demodulationsergebnis bzw. dem gegebenenfalls mit dem Wert -1 multiplizierten Demodulationsergebnis wird der neue Schlupffaktor $k_{Schlupf}$ berechnet. Zur Ermittlung der Schlupffrequenz $\omega_2$ wird der Schlupffaktor $k_{Schlupf}$ am Multiplizierglied 21 mit der drehmomentbildenden Sollwert-Stromkomponente $i_{q1soll}$ multipliziert. Als Ergebnis erhält man die Schlupffrequenz $\omega_2$ des Läufers. Diese ist mit der Ist-Drehzahl des Läufers $\omega$ zu addieren, um die Frequenz $\omega_1$ des Ständer-Drehfelds zu erhalten. Die Ständerfrequenz $\omega_1$ wird dann auf das Integrationsglied 22 zur Ermittlung der Winkellage des Drehfelds $\varphi_1$ gegeben. Die Ist-Drehzahl des Läufers $\omega$ wird dabei vom Geber 23 empfangen.

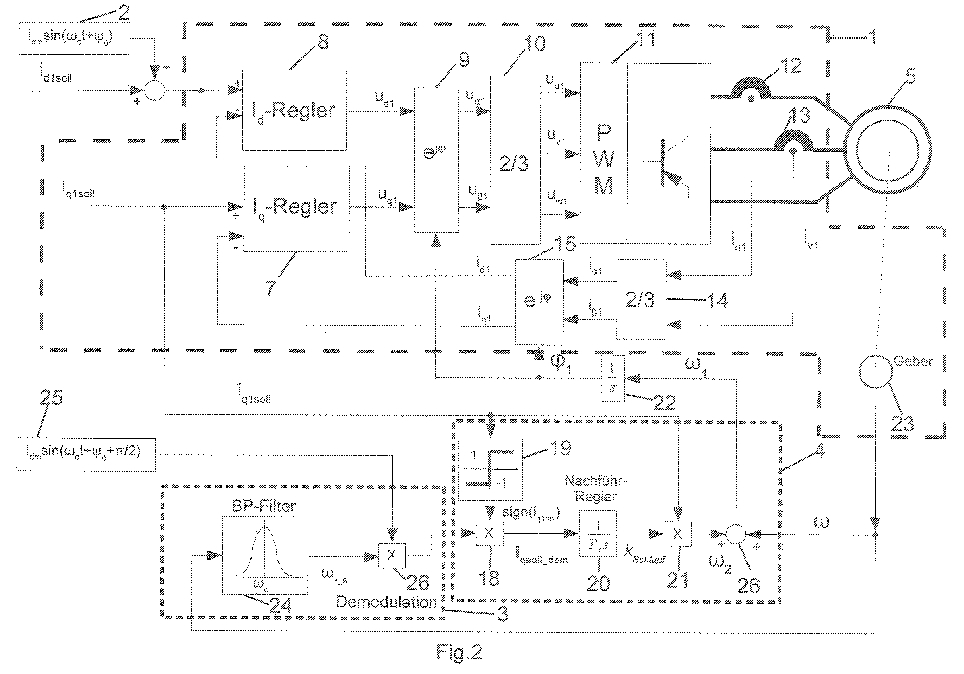

Figur 2 zeigt eine Regelungsanordnung zur Drehmomentregelung. Elemente mit gleichen Bezugszeichen haben dieselbe Bedeutung wie in Figur 1. In Abweichung zur in Figur 1 gezeigten Regelungsanordnung wird bei der Drehmomentregelung die Ist-Drehzahl des Läufers $\omega$ über die Auswerteeinheit 3 ausgewertet. Aufgrund der Trägheit bzw. Tiefpasscharakteristik der elektrischen Maschine ist am Multiplizierglied 17 ein um 90° Grad verschobenes Injektionssignal $I_{dm}\sin(\omega_c t+\Psi_0+\pi/2)$ mit dem Filterergebnis des Bandpasses 24 zu multiplizieren, um eine synchrone Demodulation zu erreichen. Zur Einspeisung des phasenverschobenen Injektionssignals $I_{dm}\sin(\omega_c t+\Psi_0+\pi/2)$ ist die zweite Testsignalquelle 25 vorgesehen. Das derart erhaltene Demodulationsergebnis wird wiederum mit dem Ausgangsergebnis des Signumglieds 19 am Multiplizierglied 18 multipliziert, dem Nachführregler 20 übergeben und am Multiplizierglied 21 mit der drehmomentbildenden Sollwert-Stromkomponente $i_{q1soll}$ multipliziert. Die so erhaltene Schlupffrequenz $\omega_2$ wird ebenfalls am Summierglied 26 mit der Ist-Drehzahl des Läufers $\omega$ zur Ständerfrequenz $\omega_1$ summiert.

Aufgrund der alleinigen Drehmomentregelung ohne Drehzahlregelung fehlt der Geschwindigkeitsregler 6. Die drehmomentbildende Sollwert-Stromkomponente $i_{q1soll}$ ist vielmehr aufgrund einer Stromwertbegrenzung auf einen Grenzwert festgelegt.

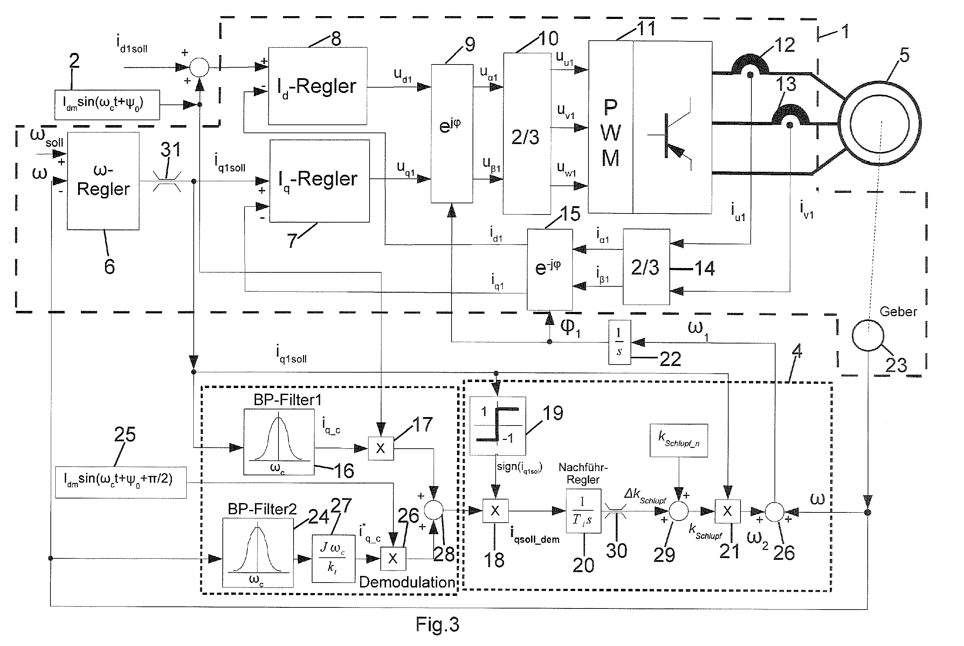

Figur 3 zeigt eine Regelungsanordnung in einer Universalausführung, in der sowohl eine alleinige Strom- bzw. Drehmomentregelung, beispielsweise wenn der Drehzahlregler voll ausgesteuert wird, wie auch eine Drehzahlregelung möglich ist. Um dies zu erreichen, sind in der Auswerteeinrichtung 3 zwei Bandpässe 16 und 24 vorgesehen, wobei auf den Bandpass 16 die drehmomentbildende Sollwert-Stromkomponente $i_{q1soll}$ und auf den Bandpass 24 die Ist-Drehzahl des Läufers $\omega$ gegeben wird. Das Filterergebnis des Bandpasses 16 wird wie zur Drehzahlregelung bereits beschrieben mit der drehmomentbildenden Sollwert-Stromkomponente $i_{q1soll}$ am Multiplizierglied 17 multipliziert. Das Filterergebnis des Bandpasses 24 wird dagegen auf ein Übertragungsglied 27 mit dem konstanten Faktor $\dfrac{J\omega_c}{k_t}$ (J: Maschinenträgheitsmoment, $\omega_c$: Injektionskreisfrequenz, $k_t$: Drehmomentkonstante der Maschine, diese ist ein Proportionalitätsfaktor zwischen dem Drehmoment und dem momentenbildenden Strom) gegeben und anschließend am Multiplizierglied 26 mit dem phasenverschobenen Injektionssignal $I_{dm}\sin(\omega_c t+\Psi_0+\pi/2)$ multipliziert. Die an den Multipliziergliedern 17 und 26 erhaltenen Ergebnisse werden am Summierglied 28 aufaddiert und als Gesamtdemodulationsergebnis an das Multiplizierglied 18 gegeben. Die Nachführeinrichtung 4 ist im Gegensatz zu den in den Figuren 1 und 2 dargestellten Regelungsanordnungen etwas abgeändert, diese Ausgestaltung lässt sich jedoch ebenfalls in den Ausführungen zur reinen Drehmomentregelung oder zur Drehzahlregelung ebenfalls verwenden. Auch könnte bei der Ausgestaltung gemäß Figur 3 eine Nachführeinrichtung 4 wie in den Figuren 1 oder 2 gezeigt verwendet werden. Im Unterschied zu den vorherigen Ausführungsformen gibt der Nachführregler 20 als Ergebnis nicht den Schlupffaktor $k_{Schlupf}$ aus, sondern lediglich eine Änderung des Schlupffaktors $\Delta_{schlupf}$. Diese Änderung wird am Summierglied 29 mit dem Nennschlupf $k_{schlupf\_n}$ addiert (Vorsteuerung), woraus sich dann der Schlupffaktor $k_{schlupf}$ ergibt. Diese Größen sind also folgendermaßen miteinander verknüpft:

$$k_{Schlupf} = k_{Schlupf\_n} + \Delta k_{Schlupf}$$

Damit die Regelung nicht instabil wird, ist ein Begrenzer 30 vorgesehen, der die Vorgabe der Änderung des Schlupffaktors $\Delta k_{schlupf}$ auf einen unteren und einen oberen Grenzwert einschränkt. Der Nennschlupf $k_{schlupf\_n}$ liegt im Bereich von 1 Hz bis 2Hz, zum Beispiel beträgt der Nennschlupf $k_{schlupf\_n}$ 1,7 Hz. Die Änderung bei liegt bei ca. 0,1 Hz. Die Änderung des Schlupffaktors $\Delta k_{schlupf}$ wird dabei so begrenzt, dass die Schlupffrequenz $\omega_2$ bei Nennstrom in einem Bereich von 1,3 Hz bis 2,1 Hz begrenzt ist.

Ein weiterer Begrenzer 31 ist dem Geschwindigkeitsregler 6 nachgeschaltet. Dieser erfüllt die Funktion der Begrenzung des momentenbildenden Stroms.

Die in den Ausführungsbeispielen gezeigten Nachführeinrichtungen 4 sind wie bereits beschrieben untereinander austauschbar, insbesondere ist die Vorsteuerung durch Vorgabe eines Nennschlupfs $k_{schlupf\_n}$ auch bei der reinen Drehmomentregelung und der reinen Drehzahlregelung möglich.

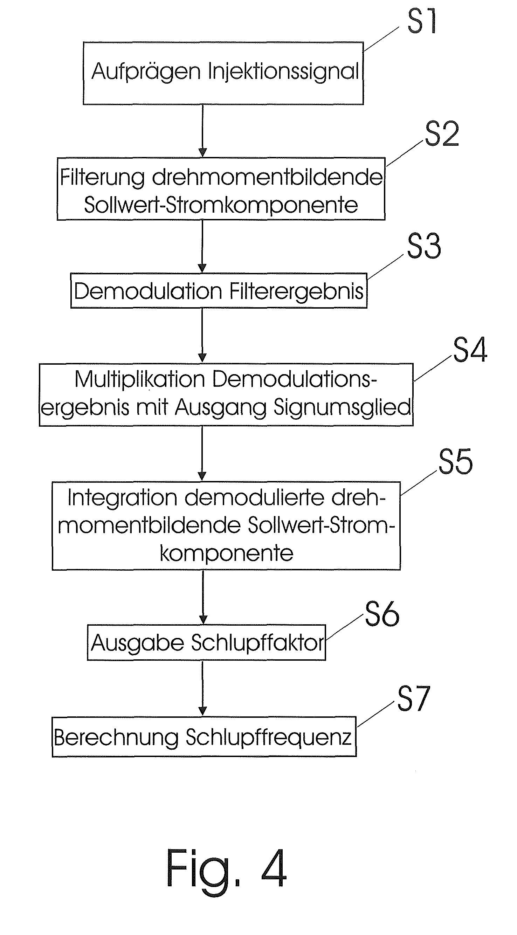

Figur 4 zeigt einen Ablaufplan zur Drehzahlregelung eines Asynchronmotors. In einem ersten Schritt S1 wird auf die flussbildende Sollwert-Stromkomponente $i_{d1soll}$ das Injektionssignal $I_{dm}\sin(\omega_c t+\Psi_0)$ aufgeprägt. Dies geschieht kontinuierlich, weshalb ebenfalls kontinuierlich als Schritt S2 die drehmomentbildende Sollwert-Stromkomponente $i_{q1soll}$ am Bandpass 16 gefiltert wird. Im nächsten Schritt S3 wird das Filterergebnis des Bandpasses 16 durch Multiplikation mit dem Injektionssignal $I_{dm}\sin(\omega_c t+\Psi_0)$ demoduliert. Als nächstes wird im Schritt S4 das Demodulationsergebnis mit dem Ausgang des Signumglieds 19 multipliziert. Dadurch wird die demodulierte drehmomentbildende Sollwert-Stromkomponente $i_{q1soll\_dem}$ erhalten. Diese demodulierte drehmomentbildende Sollwert-Stromkomponente $i_{q1soll\_dem}$ wird im Nachführregler 20 aufintegriert (Schritt S5) und als Schlupffaktor $k_{schlupf}$ ausgegeben (Schritt S6). Im letzten Schritt S7 wird die Schlupffrequenz $\omega_2$ aus dem Schlupffaktor $k_{schlupf}$ und der drehmomentbildenden Sollwert-Stromkomponente $i_{q1soll}$ ermittelt.

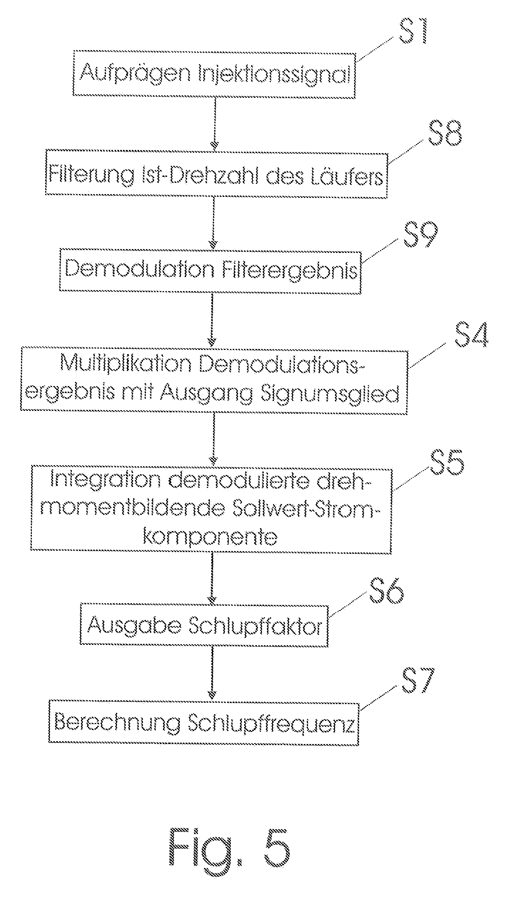

Figur 5 zeigt einen Ablaufplan eines Verfahrens zur Drehmomentregelung eines Asynchronmotors. Die mit gleichen Bezugszeichen wie in Figur 4 bezeichneten Schritte sind inhaltsgleich. Im Unterschied zum drehzahlgeregelten Verfahren gemäß Figur 4 ist nach dem Aufprägen des Injektionssignals in Schritt S1 die Ist-Drehzahl des Läufers $\omega$ als Schritt S8 im Bandpass 24 zu filtern. Als nächster Schritt S9 folgt die Demodulation des Filterergebnisses mit dem um 90° Grad phasenverschobenen Injektionssignal $I_{dm}\sin(\omega_c t+\Psi_0+\pi/2)$.

Die danach folgenden Schritte S4, S5, S6 und S7 verlaufen wiederum identisch zur Drehzahlregelung gemäß Figur 4.

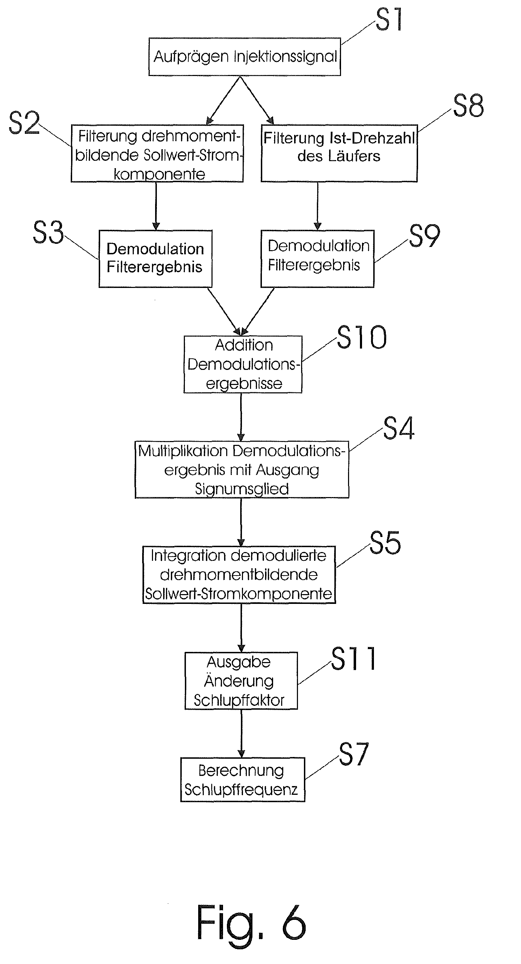

Figur 6 zeigt ein Regelungsverfahren, bei dem sowohl die Drehzahlregelung wie auch die Drehmomentregelung zum Einsatz kommt. Dabei laufen die jeweiligen Schritte der Filterung S2 und S8 sowie der Demodulation S3 und S9, die bereits aus den Verfahren zur Drehzahlregelung und Drehmomentregelung jeweils allein angewendet wurden, zeitgleich und parallel ab. Dadurch wird als neuer Schritt S10 notwendig, die jeweiligen Demodulationsergebnisse aufzuaddieren.

In weiterer Änderung wird als Schritt S11 die Änderung des Schlupffaktors $\Delta k_{schlupf}$ ausgegeben und mit dem Nennschlupf $k_{schlupf\_n}$ addiert, bevor die Schlupffrequenz $\omega_2$ gemäß Schritt S7 berechnet wird. Die Schritte S7 und S11 sind wie bereits beschrieben austauschbar.

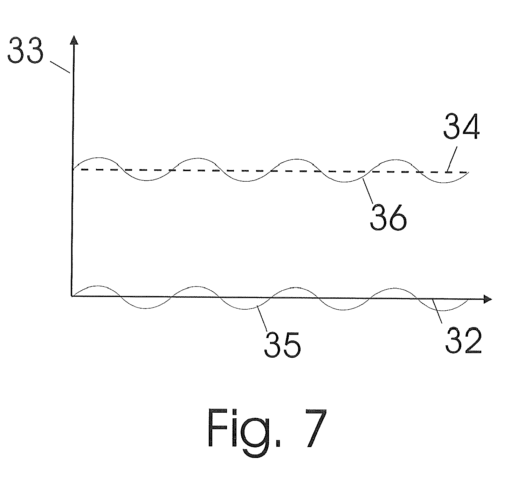

Figur 7 zeigt den zeitlichen Verlauf der flussbildenden Sollwert-Stromkomponente $i_{d1soll}$. Dabei bezeichnen die x-Achse 32 die Zeit und die y-Achse 33 den Strom in Ampere. Die Linie zeigt den Grundpegel 34 der flussbildenden Sollwert-Stromkomponente, der beispielsweise im Bereich von 10 A liegt. Auf den Grundwert 34 wird die das modulierende Injektionssignal $I_{dm}\sin(\omega_c t+\Psi_0)$ darstellende Kurve 35 addiert, wodurch sich die wellige Kurve 36 ergibt, die die amplitudenmodulierte, flussbildende Sollwert-Stromkomponente $i_{d1soll}$ repräsentiert. Die Abweichung zwischen dem Grundwert 34 und der Kurve 36 beträgt am Scheitelpunkt beispielsweise ca. 20%. Infolgedessen und auch aufgrund der relativ hohen Injektionskreisfrequenz $\omega_c$ ist der Einfluss auf das Feld $\Psi$ der elektrischen Maschine äußerst gering.

Das erfindungsgemäße Verfahren wie auch die Regelungsanordnungen können sowohl im generatorischen und motorischen Betrieb eingesetzt werden.

Bezugszeichenliste

1    Steuerungsgrundanordnung

2    Testsignalquelle

3    Auswerteeinrichtung

4    Nachführeinrichtung

5    Stator

6    Geschwindigkeitsregler

7    Querstromregler

8    Längsstromregler

9    Koordinaten-Transformationseinheit

10   2-zu-3 Phasen-Transformationseinheit

11   Umrichter

12   Stromsensor

13   Stromsensor

14   3-zu-2 Phasen-Transformationseinheit

15   zweite Koordinaten-Transformationseinheit

16   Bandpass

17   Multiplizierglied

18   Multiplizierglied

19   Signumsglied

20   Nachführregler

21   Multiplizierglied

22   Intergrierglied

23   Geber

24   Bandpass

25   Zweite Testsignalquelle

26   Summierglied

27 Übertragungsglied

28 Summierglied

29 Summierglied

30 Begrenzer

31 Begrenzer

32 X-Achse

33 Y-Achse

34 Grundpegel

35 Kurve

36 Kurve

S1 Schritt: Aufprägen Injektionssignal

S2 Schritt: Filterung drehmomentbildende Sollwert-Stromkomponente

S3 Schritt: Demodulation Filterergebnis

S4 Schritt: Multiplikation Demodulationsergebnis mit Ausgang Signumsglied

S5 Schritt: Integration demodulierte drehmomentbildende Sollwert-Stromkomponente

S6 Schritt: Ausgabe Schlupffaktor

S7 Schritt: Berechnung Schlupffrequenz

S8 Schritt: Filterung Ist-Drehzahl des Läufers

S9 Schritt: Demodulation Filterergebis

S10 Schritt: Addition Demodulationsergebnisse

S11 Schritt: Ausgabe Änderung Schlupffaktor

$i_{q1soll}$ drehmomentbildende Sollwert-Stromkomponente

$i_{d1soll}$ flussbildende Sollwert-Stromkomponente

$i_{\alpha1}$ Längsstrom (statorbezogen)

$i_{\beta1}$ Querstrom (statorbezogen)

$i_{d1}$ flussbildende Ist-Stromkomponente (rotorbezogen)

$i_{q1}$ drehmomentbildende Ist-Stromkomponente (rotorbezogen)

$I_{dm}\sin(\omega_c t+\Psi_0)$ Injektionssignal

$I_{dm}\sin(\omega_c t+\Psi_0+\pi/2)$ verschobenes Injektionssignal

$\omega_c$     Injektionskreisfrequenz

$\omega_1$     Ständerfrequenz

$\omega_2$     Schlupffrequenz

$\omega$     Ist-Drehzahl des Läufers

$\varphi_1$     Winkellage des Drehfelds

$i_{u1}$     Phasenstrom

$i_{v1}$     Phasenstrom

$u_{d1}$     Längsspannungsvorgabe (rotorbezogen)

$u_{q1}$     Querspannungsvorgabe (rotorbezogen)

$u_{\alpha1}$     Längsspannungsvorgabe (statorbezogen)

$u_{\beta1}$     Querspannungsvorgabe (statorbezogen)

$k_{schlupf}$     Schlupffaktor

$r_2$:     Rotorwiderstand

$L_h$:     Hauptinduktivität der gesamten Maschine

$T_R$:     Rotorzeitkonstante

$I_d$:     Längsstromwert, flussbildende Komponente

**Patentansprüche**

1. Verfahren zur Nachführung einer Schlupfvorgabe für einen einen feldorientierten Regelkreis einer Asynchronmaschine, wobei eine flussbildende Sollwert-Stromkomponente ($i_{disoll}$) mit einem Testsignal beeinflusst wird, und mit dem in der Asynchronmaschinen erzeugten Drehmoment zusammenhängende Größen, beispielsweise eine Ist-Drehzahl des Läufers ($\omega$) und/oder eine drehmomentbildende Istwert- oder Sollwert-Stromkomponente ($i_{q1soll}$), auf eine Wechselwirkung mit dem oder auf eine Beeinflussung durch das Testsignal hin ausgewertet werden, und abhängig von dabei festgestellten Testsignal-Anteilen die Schlupfvorgabe ermittelt oder verstellt wird. **dadurch gekennzeichnet; dass** ein Testsignal mit einer vorbestimmten diskreten Injektionskreisfrequenz ($\omega_c$) verwendet wird, auf die hin die mit dem Drehmoment zusammenhängenden Größen zur Feststellung ihrer Testsignal-Anteile gefiltert werden.

2. Verfahren nach Anspruch 1, **dadurch gekennzeichnet, dass** als Testsignal ein stetiges, periodisches, kontinuierliches oder quasikontinuierliches Signal mit der Injektionskreisfrequenz ($\omega_c$) verwendet wird.

3. Verfahren nach Anspruch 1 oder 2, **dadurch gekennzeichnet, dass** als Testsignal ein sinusförmiges Signal verwendet wird.

4. Verfahren nach Anspruch 1 oder 2 oder 3, **dadurch gekennzeichnet, dass** die Periode des Testsignals ($T_c$) kleiner Als die Rotorzeitkonstante ($T_R$) der elektrischen Asynchronmaschine ist und die Injektionskreisfrequenz ($\omega_c$) innerhalb der Bandbreite oder des Durchlassbereichs des Drehzahlregelkreises liegt.

5. Verfahren nach einem der vorangehenden Ansprüche, **dadurch gekennzeichnet, dass** die Filterergebnisse demoduliert werden und die Schlupfvorgabe in Abhängigkeit des Demodulationsergebnisses ermittelt wird.

6. Verfahren nach Anspruch 5, **dadurch gekennzeichnet, dass** das Vorzeichen oder die Phase der Schlupfvorgabe an das Vorzeichen der drehmomentbildenden Istwert- oder Sollwert-Stromkomponente ($i_{q1soll}$) oder an das Vorzeichen des jeweiligen Quadranten eines 4-Quadranten-Antriebs angepasst wird.

7. Verfahren nach einem der vorangehenden Ansprüche, **dadurch gekennzeichnet, dass** das Testsignal mit der Injektionskreisfrequenz ($\omega_c$) mit einer vorgegebenen Phasenverschiebung ($\pi/2$) zur Demodulation verwendet wird.

8. Verfahren nach einem der vorangehenden Ansprüche, **dadurch gekennzeichnet, dass** die Maschinendrehzahl ($\omega$) und gleichzeitig die drehmomentbildende Istwert- oder Sollwert-Stromkomponente ($i_{q1soll}$) jeweils zur Feststellung ihrer Testsignal-Anteile parallel gefiltert, die jeweiligen Filterergebnisse nachfolgend parallel demoduliert und dann miteinander summiert oder einander überlagert werden, und das Summier-oder Überlagerungsergebnis zur Schlupfvorgabe verwendet wird.

9. Verfahren nach einem der vorangehenden Ansprüche, **dadurch gekennzeichnet, dass** zur Schlupfvorgabe ein als Integrierglied ausgeführter Nachführregler (20) verwendet wird, mit dem die Filterergebnisse, gegebenenfalls nach Demodulation und/oder Gewichtung mit dem Vorzeichen beziehungsweise Betriebsquadranten der drehmomentbildenden Istwert- oder Sollwert-Stromkomponente ($i_{q1soll}$), zu einem Schlupffaktor ($k_{Schlupf}$) verarbeitet werden.

10. Verfahren nach Anspruch 9, **dadurch gekennzeichnet, dass** der Schlupffaktor ($k_{Schlupf}$) mit der drehmomentbildenden Istwert- oder Sollwert-Stromkomponente ($i_{q1soll}$) multipliziert wird.

11. Verfahren nach Anspruch 9 oder 10, **dadurch gekennzeichnet, dass** der Schlupffaktor ($k_{Schlupf}$) mit seinem Nennwert ($k_{Schlupf\_n}$) am Ausgang des Nachführreglers (20) vorgesteuert wird.

12. Verfahren nach einem der vorangehenden Ansprüche, **dadurch gekennzeichnet, dass** die Injektionskreisfrequenz ($\omega_c$) vorzugsweise kontinuierlich innerhalb eines vorbestimmten Intervalls ($\omega_{c0} - \Delta\omega$, $\omega_{c0} + \Delta\omega$) variiert wird.

13. Feldorientierte Regelungsanordnung mit einer Asynchronmaschine und einem Schlupfvorgabemodul zur Berücksichtigung eines Schlupfes zwischen einer Ist-Drehzahl ($\omega$) des Läufers und der Ständer-Drehfeldgeschwindigkeit ($\omega_1$) der Asynchronmaschine, insbesondere zur Durchführung des Verfahrens nach einem der vorangehenden Ansprüche, wobei das Schlupfvorgabemodul umfasst:

   - eine Testsignalquelle (2), deren Ausgang mit einem Sollwert-Eingang eines Reglers (7) für die flussbildende Sollwert-Stromkomponente ($i_{q1soll}$) gekoppelt ist,
   - ferner eine Nachführeinrichtung (4), die eingangsseitig mit dem Ausgang einer Auswerteeinrichtung (3) verbunden und zur Ermittlung eines Schlupffaktors ($k_{Schlupf}$) zur Schlupf-Berücksichtigung ausgebildet ist, **dadurch gekennzeichnet, dass**
   - die Auswerteeinrichtung (3) eingangsseitig mit einem Geber (23) für die Ist-Drehzahl ($\omega$) des Läufers und/oder mit einer drehmomentbildenden Istwert- oder Sollwert-Stromkomponente ($i_{q1soll}$) gekoppelt ist und zur Erzeugung und Ausgabe eines Signals oder Wertes proportional zu bei der Auswertung festgestellten Testsignal-Anteilen in der Ist-Drehzahl ($\omega$) des Läufers und/oder in der drehmomentbildenden Istwert- oder Sollwert-Stromkomponente ($i_{q1soll}$) ausgebildet ist.

14. Anordnung nach Anspruch 13, **dadurch gekennzeichnet, dass** die Testsignalquelle (2) zur Ausgabe eines stetigen, periodischen, kontinuierlichen oder quasikontinuierlichen Signals mit einer vorbestimmten, diskreten Injektionskreisfrequenz ($\omega_c$) ausgebildet ist, und die Auswerteeinrichtung mindestens einen Bandpass (16, 24) umfasst, dessen Mittenfrequenz auf die Injektionskreisfrequenz ($\omega_c$) abgestimmt ist, wobei der Bandpass (16, 24) eingangsseitig mit einer drehmomentbildenden Istwert- oder Sollwert-Stromkomponente ($i_{q1soll}$) oder mit einem Geber (23) für eine Ist-Drehzahl des Läufers ($\omega$) der Asynchronmaschine verbunden ist.

15. Anordnung nach Anspruch 14, **dadurch gekennzeichnet, dass** die Auswerteeinrichtung (3) zur Erzeugung eines Ausgangswerts proportional zum die Injektionskreisfrequenz ($\omega_c$) aufweisenden Bandpass-Ausgangssignal mindestens einen Demodulator umfasst, dessen Ausgang der Nachführeinrichtung (4) zugeführt ist.

16. Anordnung nach Anspruch 14 oder 15, **gekennzeichnet durch** wenigstens zwei parallele, gleichartige Bandpässe (16, 24) in der Auswerteeinrichtung (3), von denen einer mit der drehmomentbildenden Istwert- oder Sollwert-Stromkomponente ($i_{q1soll}$), und der andere mit einem Geber (23) für eine Ist-Drehzahl des Läufers ($\omega$) verbunden ist.

**17.** Anordnung nach einem der vorangehenden Ansprüche, **dadurch gekennzeichnet, dass** die Nachführeinrichtung (4) einen eingangsseitig mit dem Ausgang der Auswerteeinrichtung (3) gekoppelten Nachführregler (20), beispielsweise als Integrator ausgebildet, zur Erzeugung eines Schlupffaktors ($k_{Schlupf}$) umfasst.

**18.** Anordnung nach einem der vorangehenden Ansprüche, **dadurch gekennzeichnet, dass** die Nachführeinrichtung (4) zur Verknüpfung des Schlupffaktors ($k_{Schlupf}$) mit der drehmomentbildenden Istwert- oder Sollwert-Stromkomponente ($i_{q1soll}$) zur Bildung einer Schlupffrequenz ($\omega_2$) für die Berücksichtigung des Schlupfes ausgebildet ist.

Fig. 1

Fig.2

$i_{d1soll}$

$I_{dm}\sin(\omega_c t + \psi_0)$

$I_d$-Regler

$e^{j\varphi}$

2/3

P W M

$u_{d1}$  $u_{\alpha1}$  $u_{u1}$

$u_{q1}$  $u_{\beta1}$  $u_{v1}$

$u_{w1}$

$\omega_{soll}$
$\omega$

$\omega$-Regler

$i_{q1soll}$

$I_q$-Regler

$i_{u1}$  $i_{v1}$

$i_{d1}$  $i_{\alpha1}$

$e^{-j\varphi}$  2/3

$i_{q1}$  $i_{\beta1}$

$\varphi_1$  $\frac{1}{s}$  $\omega_1$

Geber

$i_{q1soll}$

BP-Filter1

$\omega_c$

$i_{q\_c}$

X

$I_{dm}\sin(\omega_c t + \psi_0 + \pi/2)$

BP-Filter2

$\omega_c$

$\frac{J\omega_c}{k_t}$

$i_{q\_c}^*$

X

Demodulation

$\mathrm{sign}(i_{q1sol})$

Nachführ-Regler

$k_{Schlupf\_n}$

X

$i_{qsoll\_dem}$

$\frac{1}{T_i s}$

$\Delta k_{Schlupf}$

X

$k_{Schlupf}$

$\omega_2$

$\omega$

Fig.3

Fig. 4

Aufprägen Injektionssignal — S1

Filterung Ist-Drehzahl des Läufers — S8

Demodulation Filterergebnis — S9

Multiplikation Demodulationsergebnis mit Ausgang Signumsglied — S4

Integration demodulierte drehmomentbildende Sollwert-Strom-
komponente — S5

Ausgabe Schlupffaktor — S6

Berechnung Schlupffrequenz — S7

Fig. 5

Fig. 6

Fig. 7

Europäisches
Patentamt

European
Patent Office

Office européen
des brevets

**EUROPÄISCHER RECHERCHENBERICHT**

Nummer der Anmeldung

EP 10 19 6838

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 279 415 A1 (MEIDENSHA ELECTRIC MFG CO LTD [JP]) 24. August 1988 (1988-08-24) * Seite 4, Zeile 8 - Zeile 25; Abbildung 1 * | 1-3,5,13 | INV. H02P21/08 |
| A | US 5 861 728 A (TAZAWA TORU [JP] ET AL) 19. Januar 1999 (1999-01-19) * das ganze Dokument * | 1-18 | |

RECHERCHIERTE SACHGEBIETE (IPC)

H02P

Der vorliegende Recherchenbericht wurde für alle Patentansprüche erstellt

| Recherchenort | Abschlußdatum der Recherche | Prüfer |
|---|---|---|
| München | 30. Mai 2011 | Schürle, Patrick |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**EP 2 469 702 A1**

**ANHANG ZUM EUROPÄISCHEN RECHERCHENBERICHT**
**ÜBER DIE EUROPÄISCHE PATENTANMELDUNG NR.**

EP 10 19 6838

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-05-2011

| Im Recherchenbericht angeführtes Patentdokument | | Datum der Veröffentlichung | Mitglied(er) der Patentfamilie | | Datum der Veröffentlichung |
|---|---|---|---|---|---|
| EP 0279415 | A1 | 24-08-1988 | DE | 3882733 D1 | 09-09-1993 |
| | | | DE | 3882733 T2 | 02-12-1993 |
| | | | ES | 2043697 T3 | 01-01-1994 |
| | | | JP | 2077061 C | 09-08-1996 |
| | | | JP | 7118956 B | 18-12-1995 |
| | | | JP | 63202288 A | 22-08-1988 |
| | | | US | 4862343 A | 29-08-1989 |
| US 5861728 | A | 19-01-1999 | JP | 9304489 A | 28-11-1997 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S.WADE ; M. W. DUNNIGAN ; BARRY W. WILLIAMS.** A New Method of Rotor Resistance Estimation For Vector-Controlled Induction Machines. *IEEE Transactions On Industrial Electronics,* April 1997, vol. 44 (2